# EUROPEAN PATENT APPLICATION

(11) **EP 4 831 928 A1**
(43) Date of publication of application: **28.10.2026**
(21) Application number: 26164160.9
(22) Date of filing: 12.03.2026
(51) Int. Cl.: G06T 17/00

(54) **RECONSTRUCTION METHOD AND RECONSTRUCTION SYSTEM FOR THREE-DIMENSIONAL SCENE**

(30) Priority: 24.04.2025 TW 114115512
(71) Applicant: Acer Incorporated, New Taipei City 221 (TW)
(72) Inventor: TSAI, Tung-Chan, New Taipei City 221 (TW); CHOU, Hung-Chun, New Taipei City 221 (TW); LIN, Kai-Hsiang, New Taipei City 221 (TW); LIN, Shih-Hao, New Taipei City 221 (TW); PENG, Meng-Chih, New Taipei City 221 (TW); HSU, Wen-Cheng, New Taipei City 221 (TW)
(74) Representative: dompatent

(57) **Abstract**

A reconstruction method and a reconstruction system for a three-dimensional scene are provided. The reconstruction method for the three-dimensional scene includes the following steps. A plurality of three-dimensional Gaussian points of the three-dimensional scene are trained. The three-dimensional Gaussian points are expanded according to a plurality of position gradients of the three-dimensional Gaussian points. After expanding, quantity of the three-dimensional Gaussian points is below a predetermined upper limit. The three-dimensional Gaussian points are reduced according to a plurality of opacities of the three-dimensional Gaussian points. After the step of expanding the three-dimensional Gaussian points and the step of reducing the three-dimensional Gaussian points are executed, the step of training the three-dimensional Gaussian points of the three-dimensional scene is repeatedly executed.

## Description

### TECHNICAL FIELD

The disclosure relates in general to a reconstruction method and a reconstruction system, and more particularly to a reconstruction method and a reconstruction system for a three-dimensional scene.

### BACKGROUND

3D Gaussian splatting (3DGS) is a real-time 3D image rendering technology primarily used to reconstruct real-world three-dimensional scenes, achieving high-quality rendering with relatively low computational costs. This technology has wide applications in 3D reconstruction, VR/AR, games, and film special effects.

3D Gaussian splatting is a special point cloud rendering technique that uses 3D Gaussian points to represent points in a three-dimensional scene. Compared to the traditional NeRF method, it is faster, more flexible, suitable for real-time rendering, and can even achieve game-level smoothness.

During the reconstruction of a three-dimensional scene, continuous training is required to obtain a sufficient quantity of representative three-dimensional Gaussian points. However, during training, the quantity of the three-dimensional Gaussian points may be expanded without limit. If the quantity of the three-dimensional Gaussian points during training becomes too large, the required memory size will exceed the target hardware specifications, causing the program to crash and the reconstruction of the three-dimensional scene to fail.

In recent years, three-dimensional scene reconstruction technology has made groundbreaking progress. However, due to the unlimited expansion of the quantity of the three-dimensional Gaussian points, only high-spec computers with high-performance graphics processing units (GPUs) and sufficient memory can currently achieve high-quality image reconstruction. Computers without GPUs or with limited memory cannot perform the three-dimensional scene reconstruction technology, which greatly limits the application of the three-dimensional Gaussian splatting technology.

### SUMMARY

The disclosure is directed to a reconstruction method and a reconstruction system for a three-dimensional scene. When increasing or decreasing the quantity of the three-dimensional Gaussian points, the points to be increased and/or decreased are selected to control the quantity of three-dimensional Gaussian points during training, ensuring that the required memory size remains within the target hardware specifications. This allows for successful reconstruction of the three-dimensional scene without compromising reconstruction quality.

According to another embodiment, a reconstruction method for a three-dimensional scene is provided. The reconstruction method for the three-dimensional scene includes the following steps. A plurality of three-dimensional Gaussian points of the three-dimensional scene are trained. The three-dimensional Gaussian points are expanded according to a plurality of position gradients of the three-dimensional Gaussian points. After expanding, quantity of the three-dimensional Gaussian points is smaller than a predetermined upper limit. The three-dimensional Gaussian points are reduced according to a plurality of opacities of the three-dimensional Gaussian points. After the step of expanding the three-dimensional Gaussian points and the step of reducing the three-dimensional Gaussian points are executed, the step of training the three-dimensional Gaussian points of the three-dimensional scene is repeatedly executed.

According to an alternative embodiment, a reconstruction system for a three-dimensional scene is provided. The reconstruction system includes a training module, an expanding module and a reducing module. The training module is configured to train a plurality of three-dimensional Gaussian points of the three-dimensional scene. The expanding module is configured to expand the three-dimensional Gaussian points according to a plurality of position gradients of the three-dimensional Gaussian points. After expanding, quantity of the three-dimensional Gaussian points is smaller than a predetermined upper limit. The reducing module is configured to reduce the three-dimensional Gaussian points according to a plurality of opacities of the three-dimensional Gaussian points. After the expanding module expands the three-dimensional Gaussian points and the reducing module reduces the three-dimensional Gaussian points, the training module repeatedly trains the three-dimensional Gaussian points of the three-dimensional scene.

### BRIEF DESCRIPTION OF THE DRAWINGS

Figure 1 illustrates a schematic diagram of 3D Gaussian splatting (3DGS) according to an embodiment of this disclosure.
Figure 2 illustrates a reconstruction process of a three-dimensional scene.
Figure 3 illustrates a block diagram of a reconstruction system for the three-dimensional scene according to an embodiment of this disclosure.
Figure 4 illustrates a flowchart of a reconstruction method for the three-dimensional scene according to an embodiment of this disclosure.
Figure 5A illustrates the step S1211.
Figure 5B illustrates the step S1212.
Figure 6 illustrates a comparative experiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

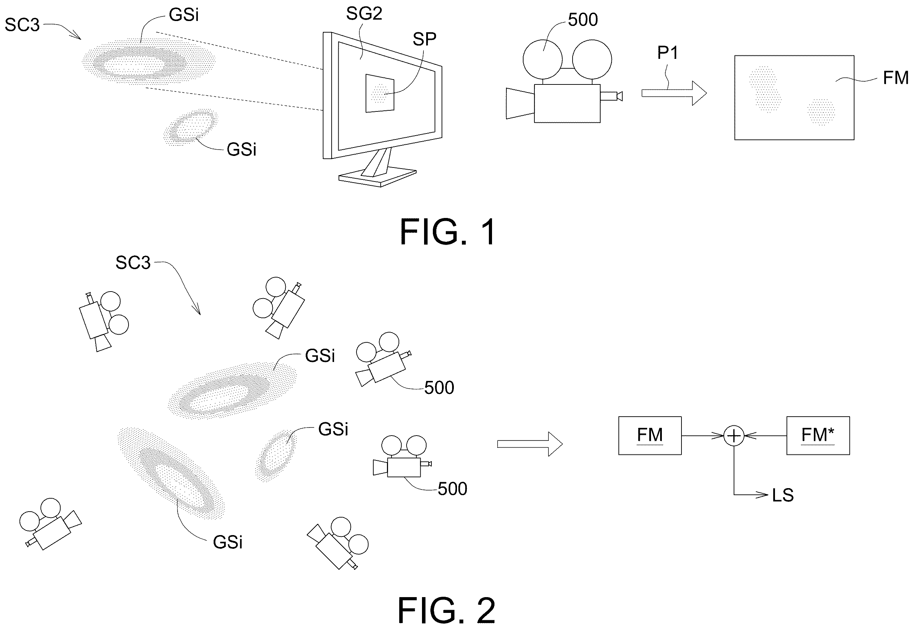

Please refer to Figure 1, which illustrates a schematic diagram of 3D Gaussian splatting (3DGS) according to an embodiment of this disclosure. The 3D Gaussian splatting technology is mainly used to reconstruct a real-world three-dimensional scene SC3 and could achieve high-quality rendering with relatively low computational costs. This technology has wide applications in 3D reconstruction, VR/AR, games, film special effects, and other fields.

As shown in Figure 1, the three-dimensional scene SC3 is not composed of a traditional triangular mesh, but rather of a plurality of three-dimensional Gaussian points GSi. Each of the three-dimensional Gaussian points GSi represents a point in the three-dimensional space, but this point is not simply a "single point"; rather, it is a Gaussian distribution with spatial extent. The 3D Gaussian splatting technique uses millions of three-dimensional Gaussian points GSi to represent the three-dimensional scene SC3. These three-dimensional Gaussian points GSi are similar to "fog particles," capable of simulating the interaction between light and objects. The shape of each of the three-dimensional Gaussian points GSi is determined by a three-dimensional mean (e.g., (x, y, z)) and a covariance matrix, allowing it to have different shapes (e.g., ellipsoids). The covariance matrix contains both shape and anisotropy. Each of the three-dimensional Gaussian points GSi also has a color (RGB) and an octane rating (Alpha, α), etc.

During rendering, the three-dimensional Gaussian points GSi need to be projected onto the two-dimensional screen space SG2. When a camera 500 views the three-dimensional scene SC3, all the three-dimensional Gaussian points GSi are projected onto the two-dimensional screen space SG2 according to the viewpoint of the camera 500, forming two-dimensional spots SP. These projected two-dimensional spots SP are elliptical Gaussian distributions, and the shape of each spot depends on its orientation, size, and depth in three-dimensional space.

Next, during the rasterization process, the three-dimensional Gaussian points GSi are sorted according to their depth and blended according to transparency using the α-Blending procedure P1 to produce a rendered image FM.

Three-dimensional Gaussian sputtering technology could directly render the three-dimensional Gaussian points GSi using a graphics processing unit (GPU), resulting in very fast rendering speeds and enabling high-quality images in real-time applications such as games or VR scenes.

In VR/AR virtual scene construction, the 3D Gaussian sputtering technology could quickly generate interactive 3D worlds. In game applications, it enables real-time rendering of game scenes, reducing latency. In film and visual effects, it could be used to efficiently create realistic 3D scenes. In map and environment scanning applications, it could be used to reconstruct three-dimensional scenes SC3 of the real world.

Please refer to Figure 2, which illustrates the reconstruction process of the three-dimensional scene SC3. During the reconstruction of the three-dimensional scene SC3, the three-dimensional scene SC3 itself is unknown, as are the quantity of the three-dimensional Gaussian points GSi required and the characteristics of each three-dimensional Gaussian point GSi. Therefore, it is necessary to estimate the parameters of the unknown three-dimensional Gaussian points GSi by collecting images from various different perspectives.

Corresponding to different viewpoints, the corresponding rendered images FM could be generated. The rendered images FM are compared with a real frame FM* to obtain the loss function LS. In one embodiment, the Stochastic Gradient Descent (SGD) algorithm could be used to minimize the loss function LS, thereby finding the optimal parameters for the three-dimensional Gaussian points GSi. In the stochastic gradient descent algorithm, each parameter update uses only a small subset (or even a single) of the data samples, rather than the entire dataset. This has the advantage of high computational speed, but may result in significant stochasticity during the update process. Because it does not require calculating the gradients of all samples at once, it is well-suited for handling large-scale data.

During the reconstruction of the three-dimensional scene SC3, continuous training is required to obtain a sufficient quantity of representative three-dimensional Gaussian points GSi. However, during training, the quantity of the three-dimensional Gaussian points GSi may be expanded without limit. If the quantity of the three-dimensional Gaussian points GSi exceeds the target hardware specifications, the required memory size will exceed the target hardware specifications, causing the program to crash and the reconstruction of the three-dimensional scene SC3 to fail.

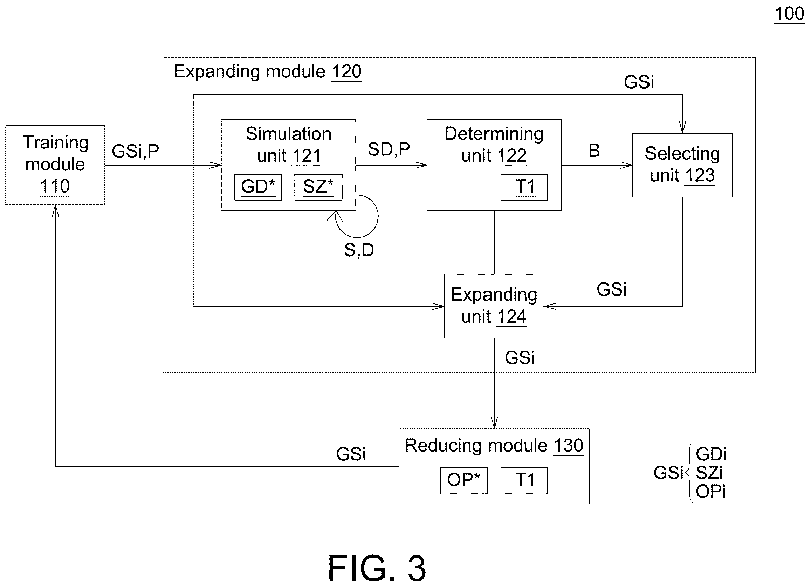

Please refer to Figure 3, which illustrates a block diagram of a reconstruction system 100 for the three-dimensional scene SC3 according to an embodiment of this disclosure. The reconstruction system 100 for the three-dimensional scene SC3 includes a training module 110, an expanding module 120, and a reducing module 130. The expanding module 120 includes a simulation unit 121, a determining unit 122, an expanding unit 124, and a selecting unit 123. The training module 110 is used to train the three-dimensional Gaussian points GSi, the expanding module 120 is used to expand the quantity of the three-dimensional Gaussian points GSi, and the reducing module 130 is used to reduce the quantity of the three-dimensional Gaussian points GSi. The training module 110, the expanding module 120, the reducing module 130, the simulation unit 121, the determining unit 122, the expanding unit 124 and/or the selecting unit 123 are, for example, a circuit, a circuit board, a storage device storing program codes or a chip. The chip is, for example, a central processing unit (CPU), a programmable general-purpose or special-purpose micro control unit (MCU), a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), an embedded system, a field programmable gate array (FPGA), other similar element or a combination thereof.

During expansion (and/or reduction) of the quantity of the three-dimensional Gaussian points GSi, some of the three-dimensional Gaussian points GSi for expansion or reduction, allowing the quantity of the three-dimensional Gaussian points GSi during training to be controlled and the required memory size to be maintained within the target hardware specifications. This enables successful reconstruction of the three-dimensional scene SC3 without compromising reconstruction quality. The operation of each component is explained in detail smaller than with flowcharts.

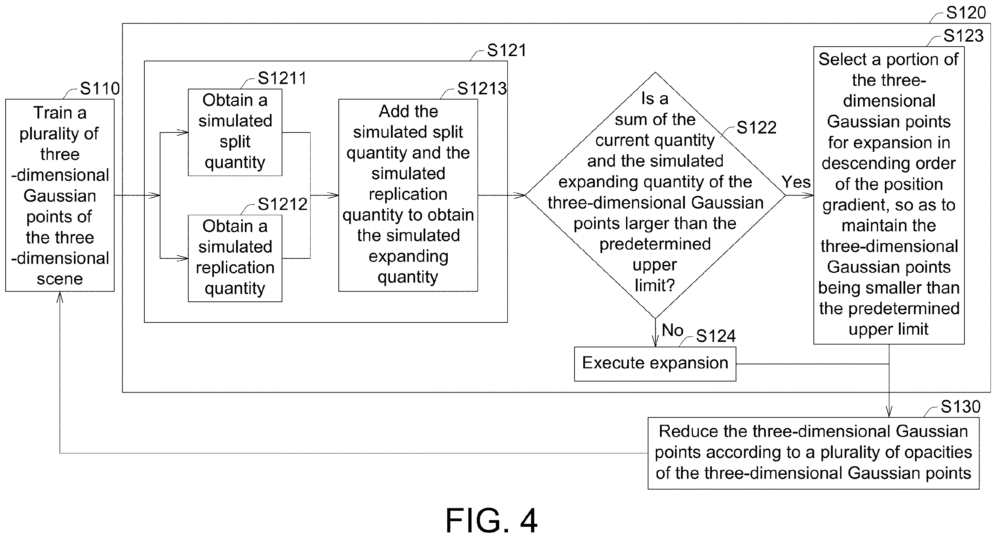

Please refer to Figure 4, which illustrates a flowchart of a reconstruction method for the three-dimensional scene SC3 according to an embodiment of this disclosure. The reconstruction method for the three-dimensional scene SC3 includes steps S110 to S130. In the step S110, as shown in Figure 3, the training module 110 trains the three-dimensional Gaussian points GSi of the three-dimensional scene SC3. The step of training the three-dimensional Gaussian points GSi is, for example, as shown in Figures 1 and 2, to estimate the parameters of the three-dimensional Gaussian points GSi. Before the convergence condition is met, the process will repeat the step S110 after executing the steps S120 and S130 until the convergence condition is met.

In the step S120, as shown in Figure 3, the expanding module 120 expands the three-dimensional Gaussian points GSi according to a plurality of position gradients GDi of the three-dimensional Gaussian points GSi. The step S120 includes steps S121 to S124. In the step S121, the simulation unit 121 of the expanding module 120 simulates a simulated expanding quantities SD of the three-dimensional Gaussian points GSi. Some of the three-dimensional Gaussian points GSi are split and have a simulated split quantity S. Some of the three-dimensional Gaussian points GSi are replicated and have a simulated replication quantity D. The simulated expanding quantity SD includes the simulated split quantity S and the simulated replication quantity D.

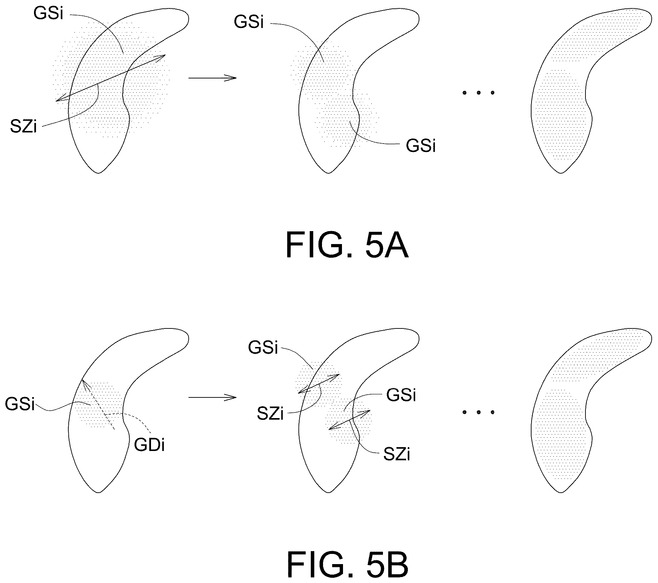

As shown in Figure 4, the step S121 includes steps S1211 to S1213. Please refer to Figure 5A for an example of the step S1211. In the step S1211, as shown in Figure 5A, the simulation unit 121 obtains the simulated split quantity S. Each of the segmented three-dimensional Gaussian points GSi has a position gradient GDi larger than a gradient threshold GD* and a size SZi larger than a size threshold SZ*. As shown in Figure 5A, when one three-dimensional Gaussian point GSi is too large, sampling is executed for this three-dimensional Gaussian point GSi via Gaussian, and the size SZi is reduced by a factor of 1.4 to 1.7 (e.g., 1.6).

Please refer to Figure 5B, which illustrates the step S1212. In the step S1212, as shown in Figure 5B, the simulation unit 121 obtains the simulated replication quantity D. Each replicated three-dimensional Gaussian point GSi has the position gradient GDi larger than the gradient threshold GD* and the size SZi less than or equal to the size threshold SZ*. As shown in Figure 5B, when one three-dimensional Gaussian point GSi is small, another three-dimensional Gaussian point GSi with the same size SZi is added along the position gradient GDi.

Next, in the step S1213, the simulation unit 121 adds the simulated split quantity S and the simulated replication quantity D to obtain the simulated expanding quantity SD (i.e., the simulated split quantity S + the simulated replication quantity D = the simulated expanding quantity SD).

Then, in the step S122, as shown in Figure 3, the determining unit 122 of the expanding module 120 determines whether the sum of the current quantity P and the simulated expanding quantity SD of the three-dimensional Gaussian points GSi is larger than a predetermined upper limit T1. The predetermined upper limit T1 could be a fixed value or could be adjusted according to the current quantity P. For example, the predetermined upper limit T1 could be K times the current quantity P, where K is, for example, 2. If the sum of the current quantity P and the simulated expanding quantity SD is larger than the predetermined upper limit T1, then the process proceeds to the step S123. If the sum of the current quantity P and the simulated expanding quantity SD is not larger than the predetermined upper limit T1, then the process proceeds to the step S124.

In the step S123, the selecting unit 123 of the expanding module 120 selects a portion of the three-dimensional Gaussian points GSi for the expanding unit 124, according to the position gradient GDi in descending order, so as to maintain the expanded three-dimensional Gaussian points GSi being smaller than the predetermined upper limit T1. For example, the actual expanding quantity B in this step is the difference between the predetermined upper limit T1 and the current quantity P (i.e. the actual expanding quantity B = the predetermined upper limit T1 - the current quantity P).

In the step S124, the expanding unit 124 of the expanding module 120 executes expansion. This step does not require filtering out some three-dimensional Gaussian points GSi, but rather segments the three-dimensional Gaussian points GSi that need to be segmented, and replicates the three-dimensional Gaussian points GSi that need to be replicated.

Then, in the step S130, as shown in Figure 3, the reducing module 130 reduces the three-dimensional Gaussian points GSi according to a plurality of opacities OPi of the three-dimensional Gaussian points GSi. In this step, the reducing module 130 selects a portion of the three-dimensional Gaussian points GSi to remove. The deleted three-dimensional Gaussian points GSi have an opacity OPi smaller than an opacity threshold OP*.

In another embodiment, the reducing module 130 could control the amount of reduction, so as to maintain the reduced three-dimensional Gaussian points GSi being larger than a predetermined lower limit T2.

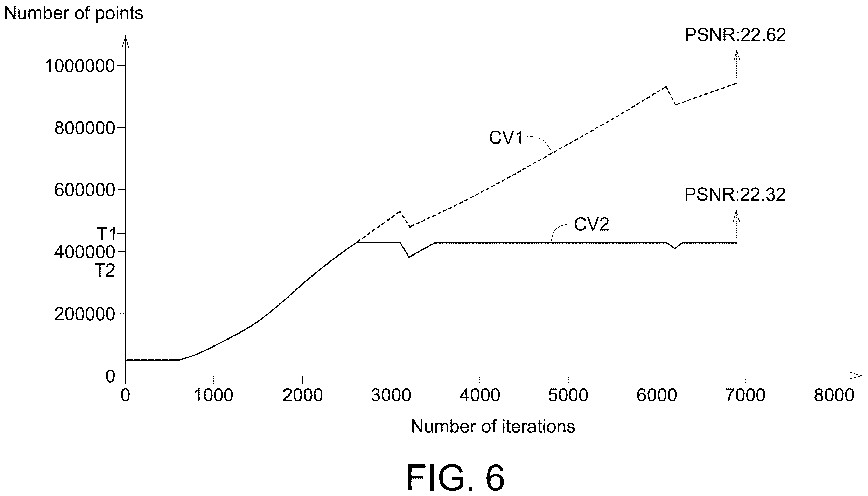

Please refer to Figure 6, which illustrates a comparative experiment. The curve CV1 represents experimental data without the numerical control technique disclosed herein, while the curve CV2 represents experimental data using the numerical control technique disclosed herein. As shown in Figure 6, with increasing iterations, the curve CV1 continuously rises, potentially exceeding the target hardware specifications and causing program interruption, preventing successful reconstruction of the three-dimensional scene. The curve CV2, however, could be controlled smaller than the predetermined upper limit T1 (or between the predetermined upper limit T1 and the predetermined lower limit T2). The experiment with curve CV1 yielded a peak signal-to-noise ratio (PSNR) of 22.62; the experiment with curve CV2 yielded a peak signal-to-noise ratio of 22.32, with little difference between the two. In other words, using the numerical control technique disclosed herein, successful reconstruction of the three-dimensional scene SC3 could be achieved without affecting reconstruction quality. Thus, Computers without graphics processors or with limited memory could reconstruct the three-dimensional scene SC3 using this technology, greatly expanding the application of three-dimensional Gaussian sputtering technology.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A reconstruction method for a three-dimensional scene, **characterized in that** the reconstruction method the three-dimensional scene (SC3) comprises:
training a plurality of three-dimensional Gaussian points (GSi) of the three-dimensional scene (SC3);
expanding the three-dimensional Gaussian points (GSi) according to a plurality of position gradients (GDi) of the three-dimensional Gaussian points (GSi), wherein after expanding, quantity of the three-dimensional Gaussian points (GSi) is smaller than a predetermined upper limit (T1); and
reducing the three-dimensional Gaussian points (GSi) according to a plurality of opacities (OPi) of the three-dimensional Gaussian points (GSi);
wherein after the step of expanding the three-dimensional Gaussian points (GSi) and the step of reducing the three-dimensional Gaussian points (GSi) are executed, the step of training the three-dimensional Gaussian points (GSi) of the three-dimensional scene (SC3) is repeatedly executed.

2. The reconstruction method for the three-dimensional scene according to claim 1, wherein the step of expanding the three-dimensional Gaussian points comprises:
simulating a simulated expanding quantity of the three-dimensional Gaussian points;
determining whether a sum of a current quantity and the simulated expanding quantity of the three-dimensional Gaussian points is larger than the predetermined upper limit; and
selecting a portion of the three-dimensional Gaussian points for expansion in descending order of the position gradient, so as to maintain the three-dimensional Gaussian points being smaller than the predetermined upper limit if the sum of the current quantity and the simulated expanding quantity is larger than the predetermined upper limit.

3. The reconstruction method for the three-dimensional scene according to claim 2, wherein some of the three-dimensional Gaussian points are split and have a simulated split quantity, and the simulated expanding quantity comprises the simulated split quantity.

4. The reconstruction method for the three-dimensional scene according to claim 3, wherein each of the three-dimensional Gaussian points which are split has a position gradient larger than a gradient threshold and a size larger than a size threshold.

5. The reconstruction method for the three-dimensional scene according to claim 2, wherein some of the three-dimensional Gaussian points are replicated and have a simulated replication quantity, and the simulated expanding quantity includes the simulated replication quantity.

6. The reconstruction method for the three-dimensional scene according to claim 5, wherein each of the replicated three-dimensional Gaussian points which are replicated has a position gradient larger than a gradient threshold and a size less than or equal to a size threshold.

7. The reconstruction method for the three-dimensional scene according to claim 2, wherein the predetermined upper limit is K times the current quantity.

8. The reconstruction method for the three-dimensional scene according to claim 1, wherein in the step of reducing the three-dimensional Gaussian points, a portion of the three-dimensional Gaussian points are selected to remove, so as to maintain the quantity of the three-dimensional Gaussian points being larger than a predetermined lower limit.

9. A reconstruction system (100) for a three-dimensional scene (SC3), **characterized in that** the reconstruction system (100) comprises:
a training module (110), configured to train a plurality of three-dimensional Gaussian points (GSi) of the three-dimensional scene (SC3);
an expanding module (120), configured to expand the three-dimensional Gaussian points (GSi) according to a plurality of position gradients (GDi) of the three-dimensional Gaussian points (GSi), wherein after expanding, quantity of the three-dimensional Gaussian points (GSi) is smaller than a predetermined upper limit (T1); and
a reducing module (130), configured to reduce the three-dimensional Gaussian points (GSi) according to a plurality of opacities (OPi) of the three-dimensional Gaussian points (GSi);
wherein after the expanding module (120) expands the three-dimensional Gaussian points (GSi) and the reducing module (130) reduces the three-dimensional Gaussian points (GSi), the training module (110) repeatedly trains the three-dimensional Gaussian points (GSi) of the three-dimensional scene (SC3).

10. The reconstruction system for the three-dimensional scene according to claim 9, wherein the expanding module comprises:
a simulation unit, configured to simulate a simulated expanding quantity of the three-dimensional Gaussian points;
a determining unit, configured to determine whether a sum of a current quantity and the simulated expanding quantity of the three-dimensional Gaussian points is greater than the predetermined upper limit;
an expanding unit; and
a selecting unit, wherein if the sum of the current quantity and the simulated expanding quantity is greater than the predetermined upper limit, the selecting unit selects a portion of the three-dimensional Gaussian points in descending order of the position gradient for the expanding unit, so as to maintain the three-dimensional Gaussian points being smaller than the predetermined upper limit.

11. The reconstruction system for the three-dimensional scene according to claim 10, wherein some of the three-dimensional Gaussian points are split and have a simulated split quantity, and the simulated expanding quantity comprises the simulated split quantity.

12. The reconstruction system for the three-dimensional scene according to claim 11, wherein each of the three-dimensional Gaussian points which are split has a position gradient larger than a gradient threshold and a size larger than a size threshold.

13. The reconstruction system for the three-dimensional scene according to claim 10, wherein some of the three-dimensional Gaussian points are replicated and have a simulated replication quantity, and the simulated expanding quantity includes the simulated replication quantity.

14. The reconstruction system for the three-dimensional scene according to claim 13, wherein each of the replicated three-dimensional Gaussian points which are replicated has a position gradient larger than a gradient threshold and a size less than or equal to a size threshold.

15. The reconstruction system for the three-dimensional scene according to claim 9, wherein the reducing module selects a portion of the three-dimensional Gaussian points to remove, so as to maintain the quantity of the three-dimensional Gaussian points being larger than a predetermined lower limit.
